# EUROPEAN PATENT SPECIFICATION

(11) **EP 3 756 983 B1**
(45) Date of publication and mention of the grant of the patent: **15.02.2023**
(21) Application number: 19183211.2
(22) Date of filing: 28.06.2019
(51) Int. Cl.: B62D 65/06, B62D 65/02, B23P 21/00, B62D 65/18, B60J 1/00

(54) **METHOD AND INSTALLATION FOR ASSEMBLING AND MOUNTING A GROUP OF MOTOR-VEHICLE COMPONENT PARTS IN A MOTOR-VEHICLE ASSEMBLY LINE**
VERFAHREN UND INSTALLATION ZUR ANORDNUNG UND MONTAGE EINER GRUPPE VON KRAFTFAHRZEUGBAUTEILEN IN EINER KRAFTFAHRZEUGMONTAGELINIE
PROCÉDÉ ET INSTALLATION POUR L'ASSEMBLAGE ET LE MONTAGE D'UN GROUPE DE PIÈCES DE COMPOSANTS DE VÉHICULE À MOTEUR DANS UNE CHAÎNE DE MONTAGE DE VÉHICULES À MOTEUR

(43) Date of publication of application: 30.12.2020
(73) Proprietor: C.R.F. Società Consortile per Azioni, 10043 Orbassano (Torino) (IT)
(72) Inventor: ZANELLA, Mr. Alessandro, I-10043 Orbassano (Torino) (IT)
(74) Representative: Notaro, Giancarlo

(56) References cited:
- US-A- 4 852 237
- US-A1- 2007 116 550
- MEYER H R: "INDUSTRIAL ROBOTS FOR DIRECT GLAZING", EUROPEAN PRODUCTION ENGINEERING, 171991 1, vol. 18, no. 1/02, 1 June 1994 (1994-06-01), pages 42-45, XP000455320, ISSN: 0940-2470
- VISIO NERF: "Automatic windshield installation on a car assembly line", Youtube, 20 February 2014 (2014-02-20), page 1 pp., XP054980111, Retrieved from the Internet: URL:https://www.youtube.com/watch?v=k2M66l 7YdCE [retrieved on 2020-01-15]
- ABB Robotics: "Safe human robot interaction - SafeMove", YouTube, 15 June 2009 (2009-06-15), page 1, XP054980112, Retrieved from the Internet: URL:https://www.youtube.com/watch?v=Fo_RvS mqZF8 [retrieved on 2020-01-16]

## Description

### Field of the invention

The present invention relates to methods and installations for assembling a group of motor-vehicle component parts and for mounting the group in a motor-vehicle assembling line, of the type comprising a first assembling phase for assembling the group, and a second subsequent assembling phase for mounting the assembled group onto a motor-vehicle structure along the aforesaid motor-vehicle assembling line. In particular, the invention relates to methods of the type in which said first assembling phase comprises the operations of:
picking up a main component from a containment rack of main components,
arranging the picked-up component in a suitable position for the manual assembling of a plurality of accessory parts onto the main component,
carrying out manual assembling, by an operator, of the aforesaid accessory parts onto the main component, by manually picking-up the accessory parts from a respective picking-up area, and
wherein said second assembling phase is a step in which mounting of the assembled group on a motor-vehicle structure, along said motor-vehicle assembling line, is carried out by means of a robot.

### Prior art

Methods and systems of the type indicated above are currently used in the automotive industry.

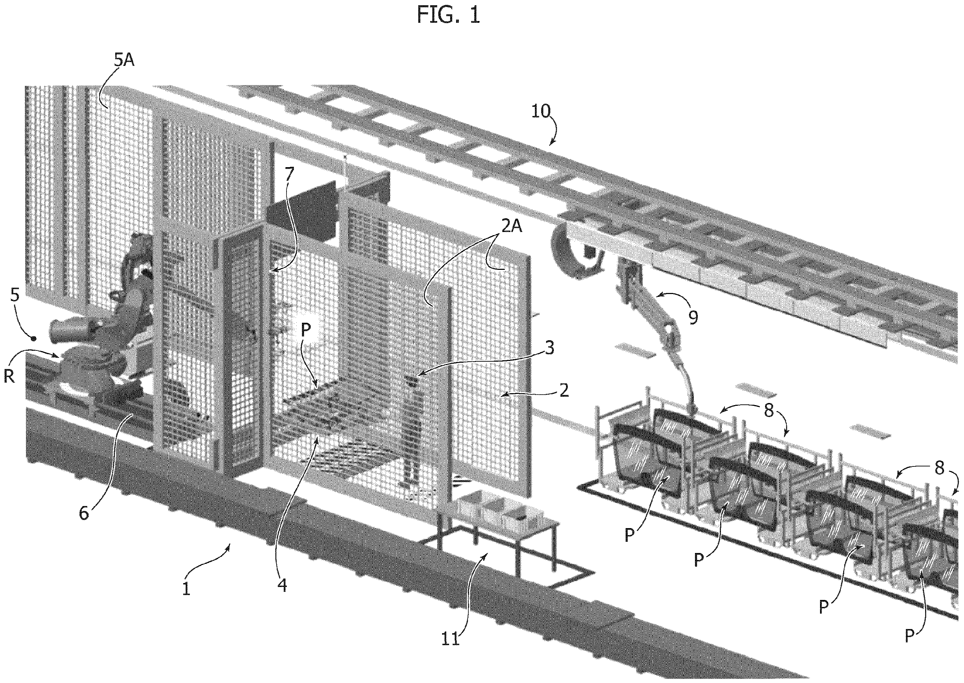

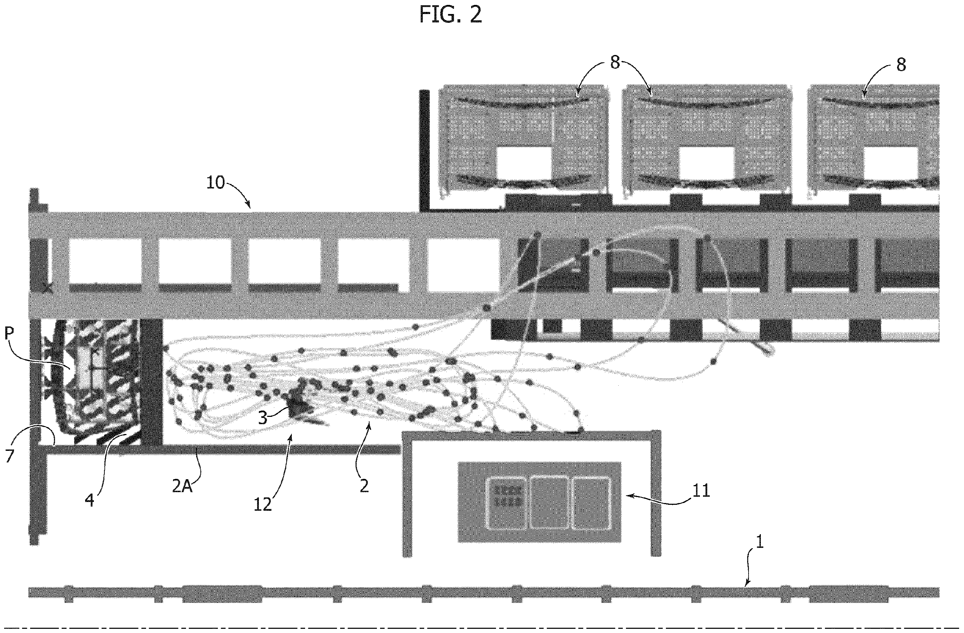

Figures 1 and 2 of the attached drawings are a schematic perspective view and a schematic plan view of an installation of the prior art used by the parent company of the Applicant in a motor-vehicle assembling line.

The installation illustrated in Figures 1 and 2 refers specifically to the assembling and mounting of a motor-vehicle windscreen unit or a rear window unit, including a windscreen or rear window glass, having an outer surface, which faces outwards in use on the motor-vehicle, and an inner surface, which faces inwards in use on the motor-vehicle, said glass constituting the aforesaid group main component. Before mounting the glass on a respective motor-vehicle body, a plurality of accessory devices, such as an inner rear-view mirror, a rain sensor device, an electric heater device, etc., must be assembled on the inner surface of the glass.

In Figures 1 and 2, numeral 1 designates a main motor-vehicle assembling line (illustrated only schematically in the drawings) along which there are carried motor-vehicle structures (motor-vehicle bodies or their subassemblies) on which motor-vehicle windscreen units and/or rear window units must be mounted. The following description is provided with reference to the case of mounting windscreen units, being understood that this description can also be applied identically to the case of mounting rear window units.

Reference number 2 generally designates an operating area, located outside of the line 1, and adjacent thereto, where an operator 3 manually performs the assembling operations of a plurality of accessory components on the inner surface of a specific windscreen glass. In this known installation, in the aforesaid operating area 2 a tiltable table 4 is arranged on which a specific windscreen P is locked (by locking devices of any type, for example, by means of suction devices) while the operator 3 performs the assembling of the accessory components. As visible in Figure 1, the operating area 2 is protected by fences 2A and is adjacent to a further operating area 5, protected by fences 5A, in which a multi-axis manipulator robot R is provided for mounting each specific windscreen unit on a motor-vehicle structure that proceeds along the line 1 (throuahout this description and claims, reference P is used to designate both the windscreen glass and the windscreen unit). For this purpose, the robot R is generally mounted on a guide system 6, which allows movement of the base of the manipulator robot R in a longitudinal direction parallel to the line 1, in order to facilitate mounting of the windscreen unit on a motor-vehicle structure placed along the line 1.

In the known solution described above, after the operator 3 has completed the assembling operations of the accessory components onto a specific glass windscreen P in the operating area 2, the table 4 is rotated about a horizontal axis so as to bring the assembled group P to the area 5 in which the robot R is located, passing through a window 7 through which the operating area 2 communicates with the operating area 5. In the overturned position within the operating area 5, the table 4 keeps the windscreen unit P in a position in which the outer surface of the windscreen faces upwards, so that it can be engaged by a gripping tool, equipped with suction cup members, carried by the manipulator robot R. In this way, the manipulator robot R picks up a single windscreen unit P and, after being moved along the guide system 6, brings it adjacent to an adhesive application area (not visible in Figures 1 and 2) in which the robot holds the windscreen unit P with its inner surface facing upwards, so as to allow application of adhesive on a peripheral portion of the inner surface of the glass. This application can take place, for example, by using an adhesive dispensing nozzle located in a stationary position and moving the the group P by means of the robot R, so as to subsequently bring the entire extension of the peripheral portion of the pane in line with the adhesive delivery nozzle. Once the adhesive has been applied, the robot can move close to a motor-vehicle structure along the assembling line 1, arranging the windscreen unit P with its inner surface facing downwards, and applying the group P onto said motor-vehicle structure in order to complete mounting thereof on the motor-vehicle structure.

Still with reference to Figures 1 and 2, each windscreen glass on which the operator must assemble the accessory parts is picked-up by the same operator 3 from one or more containers 8, which - in the example - are racks, located adjacent to the line 1. Each rack contains a plurality of glasses P arranged side-by-side in substantially vertical positions.

Each time the operator 3 has to pick up a new windscreen glass P, he moves from the operating area 2, in which he has finished assembling of a previous group, to a position adjacent to a rack 8, where he picks up a single glass P with the aid of a partner manipulator device, of the "zero-gravity" type, designated by reference 9. The device 9 is a manipulator arm movable along an overhead rail 10 and manoeuvrable by the operator 3 so as to support the entire weight of the glass P. The racks 8 reach the operating area after being transported through the plant in a condition in which the glasses P are firmly locked within the respective rack. Therefore, when the operator 3 has to pick up a glass P from a respective rack 8 he must first deactivate the blocking device of the glasses P within the rack. Only at this point, can the operator 3 pick up a single glass with the help of the partner manipulator 9 and carry it to the operating area 2. In this operating area, the operator first performs an optical inspection of the glass, in order to verify its quality, after which he arranges the glass above the table 4. Once a specific glass P has been locked onto the table 4, the operator can start the sequence of operations necessary to assemble a plurality of accessory parts onto the inner surface of the glass P. To this end, adjacent to the operating area 2, a pick-up area 11 is provided with containers in which the accessory parts are arranged. The operator must pick up the parts and assemble them onto the inner surface of the glass P arranged on the table 4.

The assembling installation and method described above are relatively complicated, expensive and not very efficient. In Figure 2, the tangle of lines generally designated by reference 12 show the movements of the operator 2 during a complete cycle of operations necessary for the assembling and mounting of a single windscreen unit. As can be seen, the installation according to the prior art involves a plurality of movements of the operator, significant dead times and, also, a relatively complicated and expensive structure for the entire installation.

Fully automated installations for assembling windshields on motor-vehicle structures are also known, where a robot picks-up a windshield from a rack, moves the windshield to a station for application of adhesive and then mounts the windshield on a motor-vehicle structure in an assembling line (see Mever H. R.: Industrial Robots for direct glazing", European Production Engineering, 171991 1, vol. 18, no. 1/02, 1 June 1994 (1994-05-01),pages 42-45, XP000455320, ISSN: 0940-2470).Similar solutions are known from US 4 852 237 A, US 2007/116550 A1 and from VISIO NERF: "Automatic windshield installation on a car assembly line", Youtube. 20 February 2014 (2014-02-20), page 1 pp., XP054980111, Retrieved from the Internet: URL:https://www.youtube.com/watch?v=k2M66I7YdCE [retrieved on 2020-01-15]

### Object of the invention

The object of the present invention is to overcome the drawbacks of the prior art, producing a simple and highly efficient method and installation for assembling a group of motor-vehicle component parts and mounting the group in a motor-vehicle assembling line.

An additional object of the invention is to achieve the aforesaid objective while substantially reducing the complexity of the installation, and safeguarding the overall safety of the operator.

### Summary of the invention

In view of achieving the aforesaid objects, the invention relates to a method according to claim 1 and an installation according to claim 6.

Further features of the invention are indicated in the dependent claims.

### Detailed description of the invention

Further characteristics and advantages of the invention will become apparent from the description that follows with reference to the attached drawings, provided purely by way of non-limiting example, wherein:
- Figures 1 and 2 are a perspective view and a plan view of an installation according to the prior art,
- Figure 3 is a schematic plan view of an installation according to a preferred embodiment of the invention,
- Figure 4 is a schematic perspective view of a part of the installation of Figure 3,
- Figure 5 is an additional plan view of the preferred embodiment of the invention, wherein the movements of the operator during an entire cycle of operations are visualized;
- Figures 6 and 7 show the detail of a gripping tool, with a windscreen unit arranged above it, in two different operating positions, respectively,
- Figure 8 is a perspective view of the unit of Figures 6 and 7 in an inverted position, with the windscreen unit facing downwards, and
- Figure 9 is a perspective view illustrating an exemplary embodiment of a rack for containing windscreen glasses for use in the installation according to the invention.

Figures 1 and 2 relating to the installation according to the prior art have already been described above.

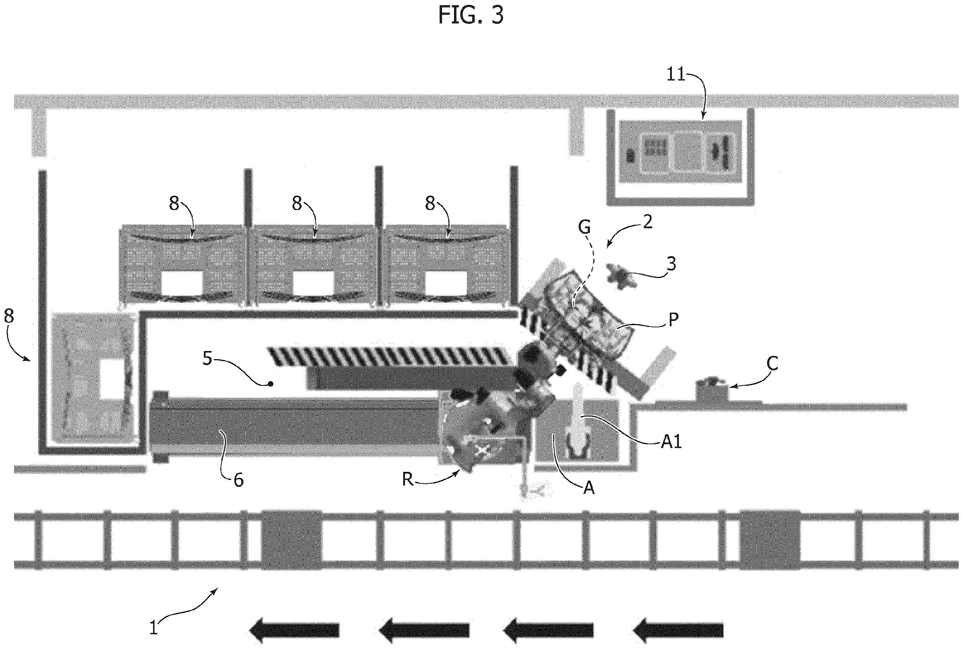

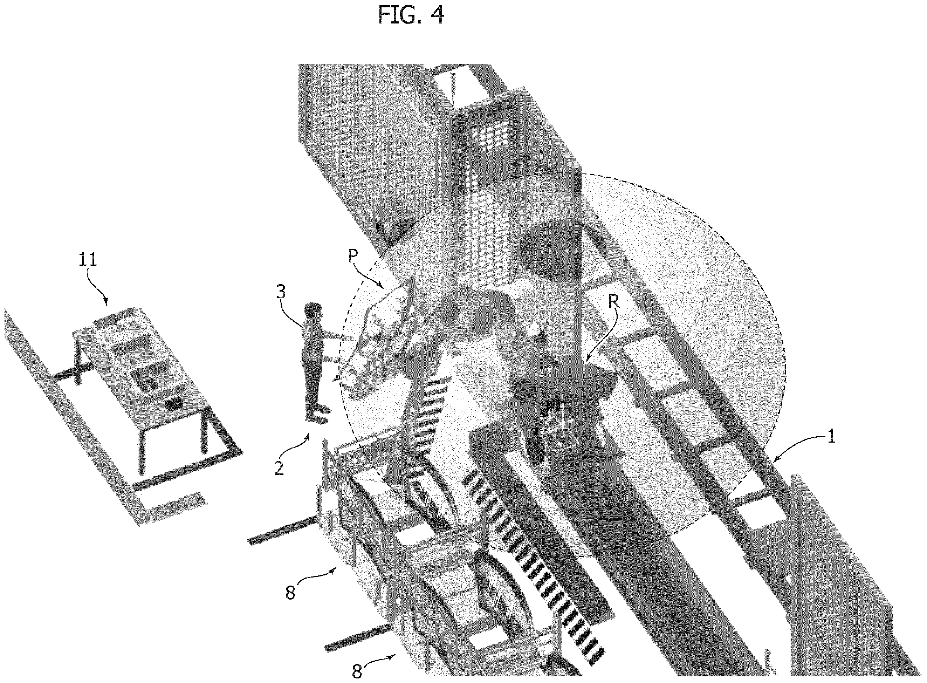

In Figures 3-9, the parts common or corresponding to those of Figures 1-4 are indicated by the same reference numbers.

A first important difference of the embodiment of the invention which is illustrated in Figures 3-9 with respect to the known installation of Figures 1 and 2 lies in that the robot R is a robot configured and controlled in such a way that the robot is able to operate in an unprotected space, close to an operator, ensuring the operator safety. In the art, various types of robots and control devices are known which allow human-robot coexistence, guaranteeing the necessary levels of safety. In particular, collaborative robots equipped with "Hand Guiding" systems are known, which constitute a preferred embodiment in the case of the invention, in which the operator can guide the movement of the robot by means of a manual control device placed adjacent to the terminal end of the robot which carries the operator tool (in this case typically a gripping tool).

In general, the installation according to the invention can be provided with means of any known type able to monitor (for example with the aid of videocameras) the operating area, to ensure safety of the operator, and also able to recognize and classify the different operations performed by the operator, with a view to guaranteeing his safety, for example, in order to prevent any behaviour outside a predetermined level of safety.

Thanks to the adoption of these arrangements, the operating area 2 in which the operator 3 is located is not a closed area, and is not separated from the operating area 5 in which the robot R is located, which also in this case is preferably a multi-axis manipulator robot, equipped with a gripping tool.

Figures 3-9 also refer to an embodiment of the installation according to the invention for assembling and mounting of a windscreen unit P.

Another important difference of the installation according to the invention with respect to the known installation of Figures 1 and 2 lies in that the robot R, in the case of the installation according to the invention, is used to perform both the pick-up operation of the windscreen glass P from a respective rack 8, and to support the picked-up windscreen glass P in one or more positions suitable for performing an optical detection of the quality of the glass (but this optical detection operation could also be omitted), and for supporting the windscreen glass P in a position suitable for manual assembling of the plurality of accessory parts by the operator 3, as well as for performing the final mounting of the windscreen unit on a motor-vehicle structure arranged along the line 1, after being at an operating station A for applying the adhesive.

Therefore, as can be seen, the partner manipulator tool 9 of the known device is completely eliminated, since there is no intervention of the operator 3 in the step of picking-up a windscreen glass P from a rack 8. It is the robot R itself that is involved in the pick-up step of the glass P from a respective rack 8. To this end, the base of the multi-axis manipulator robot R is mounted so that it is movable along a guide system 6, similarly to the known installation, to favour the movements of the robot between its various operating positions, including - in particular - the picking-up position of a windscreen glass from a respective rack; the support position of the windscreen in the operating area 2 during the manual assembling operations of the component parts; the position for applying adhesive at station A; and finally the mounting position of the windscreen glass onto a motor-vehicle structure along the line 1.

In the installation according to the invention, the tilting table 4 of the known installation is also eliminated, since during execution of the assembling operations of the accessory parts onto the windscreen glass P by the operator 3, the windscreen is supported in a motionless position by the same robot R, despite the forces applied to it by the operator 3 during the aforesaid manual assembling operations.

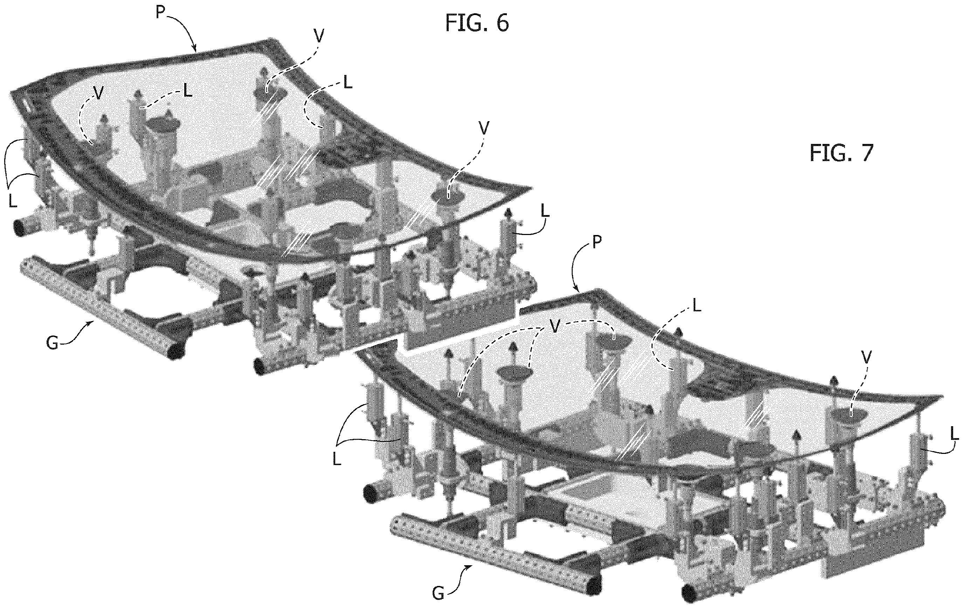

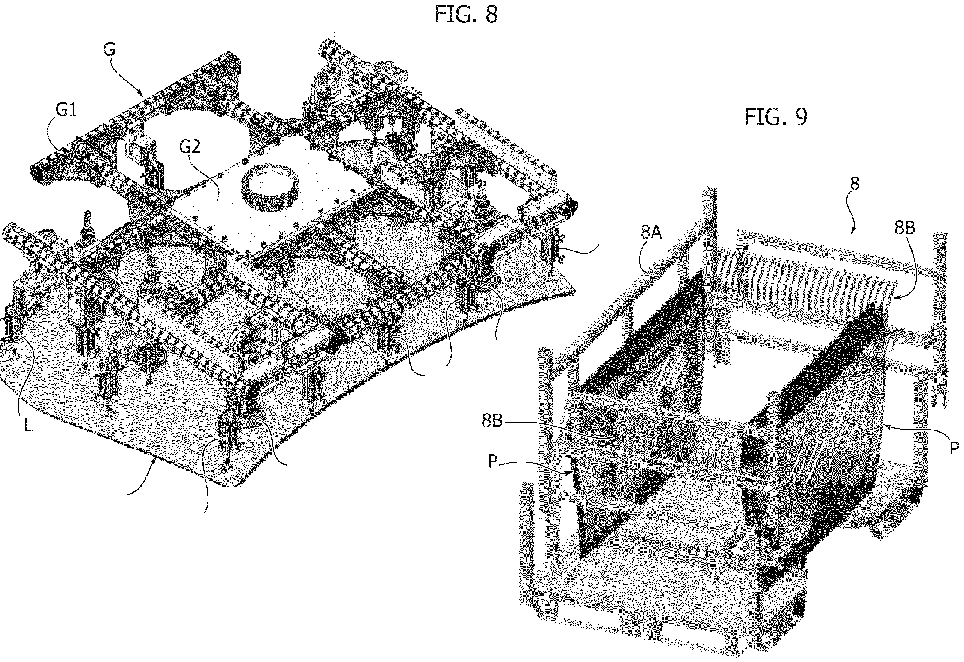

Figure 9 of the attached drawings shows an exemplary embodiment of a containment rack 8 for windscreen glasses P. In the installation according to the invention, the windscreen glasses P are kept side-by-side in vertical positions, with the outer surface of the windscreen P placed at one end of the series of windscreen glasses P accessible from the outside. In this way, this glass P can be picked up by the robot R with the aid of a gripping tool G. One example of the tool G is visible in Figures 6-8 and will be illustrated in detail hereinafter. Returning to the rack 8, this has a frame 8A and comb-like structures 8B which allow the windscreen glasses P to be kept in side-by-side positions, and spaced apart from each other. During transport of the racks 8 in the installation, the windscreen glasses P are kept locked within the rack. The operator must therefore deactivate the locks of the windscreen glasses P, before a windscreen is picked up by the robot R, similarly to that of the installation according to the prior art. However, preferably in the case of the invention, provision is made for adoption of automatic locking devices, which can be activated and deactivated remotely by the operator himself, in order to reduce the movements and operations that the operator must necessarily perform during an entire cycle of operations.

The gripping device G illustrated by way of example in Figures 6-9 comprises a supporting frame G1 carried by an attachment flange G2 provided with a device for coupling to the wrist of the multi-axis manipulator robot R. The framework G1 carries a series of vacuum-operated suction cup gripping devices V, which are known per se. In the preferred example shown, each suction device V is carried by an actuator L, which allows movement of the suction device V axially between a retracted position (Figure 6) and an advanced position (Figure 7). When the robot R takes a glass P from a rack 8, it engages the outer surface of the glass P with the suction devices V in their retracted position. The devices V remain in this position during the subsequent operations in which the robot carries the glass P to a position for performing optical detection of the quality of the glass, and then into the position in which the operator 3 carries out assembling of the accessory parts. The suction cup devices remain in their retracted condition also during the subsequent step in which the robot carries the glass to the adhesive application station A. It is only when the robot finally brings the assembled windscreen unit P, after application of the adhesive, above a motor-vehicle structure arranged along the assembling line 1 that the actuators L are activated to control the advancement of the suction cup devices in order to press the windscreen unit into a mounting position against the motor-vehicle structure.

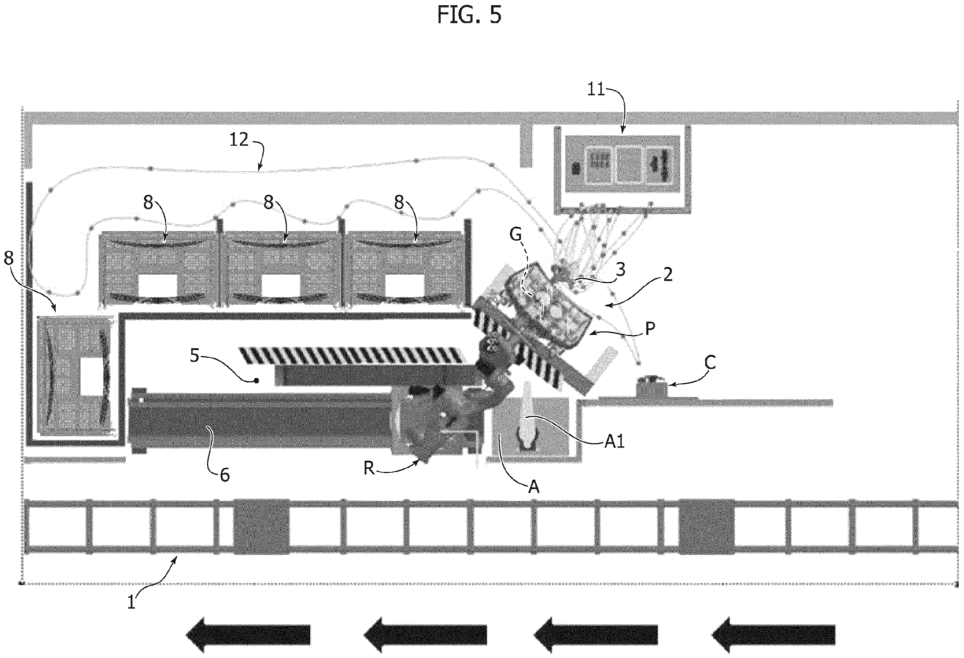

Preferably, after that the robot R has taken a windscreen glass P from a rack 8, by engaging the outer surface of a glass P with the gripping tool G, the robot brings the glass to one or more positions for optical detection of the windscreen quality. This operation can also be automated, by using one or more videocameras connected to an electronic controller capable of checking the quality of the glass, based on the image by said one or more videocameras. After this checking operation, the robot R brings the windscreen glass P to the operating area 2, in a suitable position to enable the operator 3 to carry out assembling of the accessory parts on the inner surface of the glass P. To this end, the robot R supports the glass P with its inner surface facing upwards and placed at a height comfortable for the operator 3. Of course, the operator can be provided with a robot guide system (for example, a Hand Guiding system of the type mentioned above) in order to correct the operating position of the robot, for example, to adapt the height position of the glass P in the operating area 2 to the height of the operator. In Figures 3 and 5, the reference C indicates an electronic controller of the robot equipped with a human-machine interface of any type.

As already indicated above, the operating area 2 in which the operator 3 performs the manual assembling operations is adjacent to and not separate from the operating area 5 in which the robot R operates, thanks to the fact that the robot is of the collaborative type. The pick-up area 11 for the accessory parts to be assembled on the windscreen glass is immediately adjacent to the operating area 2, on the opposite side of the operator 3 with respect to the robot R, so that the operator can comfortably pick-up the parts to be assembled, and then proceed to assemble them, without having to walk through long lengths. Figure 5 shows the lines 12 corresponding to the movements of the operator 3 during the entire cycle of operations. As can be seen, the movements are substantially reduced, the most significant movements being those necessary for reaching the racks 8 in order to release the relative locking devices for the glasses. However, these movements can be eliminated if, as mentioned above, automatic locking devices that can be activated and deactivated remotely by the operator 3 are used.

Once the assembling operations of the accessory parts have been completed, the robot R carries the assembled group P below an adhesive delivery nozzle A1 in an adhesive application station A, which is immediately adjacent to the operating area 2, which also makes it possible to reduce the movements of the robot R. In a preferred example, it is the robot that rotates the glass P, keeping it with its inner surface facing upwards, so as to subsequently bring the entire peripheral extension of the glass below the dispensing nozzle A1. In this way, application of an adhesive layer is obtained on the entire peripheral portion of the inner surface of the glass. Once this operation has been carried out, the robot upturns the windscreen unit P, orienting it with its inner surface facing structure (not illustrated) arranged along the assembling line 1 in order to mount the windscreen unit P onto said structure. In this condition, the actuators L are activated to press the windscreen unit P against the structure of the motor-vehicle in order to complete the mounting operation.

As clearly apparent from the foregoing description, the installation and the method according to the invention provide a considerable simplification and reduction of costs with respect to the known installation and method and, above all, considerably increase efficiency and productivity. At the same time, manual operations can be performed by the operator much more easily and with greater comfort and, above all, with total protection of the operator's safety.

The installation according to the invention has a configuration such that it is easily adaptable to the needs of each specific application, ensuring that every operation forming part of the complete cycle of operations can be performed with the greatest possible efficiency and quality.

Of course, without prejudice to the principle of the invention, the details of construction and the embodiments may vary widely with respect to those described and illustrated purely by way of example, without departing from the scope of the present invention as defined by the claims.

## Claims

1. A method for assembling a group of motor-vehicle component parts and for mounting the group in a motor-vehicle assembling line,
said method comprising a first group assembling phase for assembling the group (P) and a second subsequent assembling phase for mounting the assembled group (P) onto a motor-vehicle structure along a motor-vehicle assembling line (1),
wherein said first assembling phase comprises the operations of:
- picking up a main component (P) from a container (8) of main components (P),
- arranging the main component in a suitable position for the manual assembling of a plurality of accessory parts onto the main component (P),
- carrying out manual assembling, by an operator (3), of the aforesaid accessory parts onto the main component (P), by manually picking-up the accessory parts from a respective picking-up area (11),
- carrying out mounting of the assembled group (P) onto a motor-vehicle structure, along said assembling line, with the aid of a robot (R),
wherein said robot is a robot configured and/or controlled in such a way that the robot can operate in an unprotected space, close to the operator (3), and
wherein said robot (R) is used:
- for performing the pick-up operation of the main component (P) from the container (8),
- for arranging the main picked-up component (P) in a suitable position, for manually assembling the plurality of accessory parts onto the main component (P) by said operator (3), said robot holding said main component in said position while the accessory parts are being assembled by said operator (3), and
- for carrying out mounting of the assembled group (P) onto a motor-vehicle structure,
wherein the group of motor-vehicle component parts is a motor-vehicle windscreen unit (P) or a rear window unit, including:
- a windscreen or rear-window glass (P), having an outer surface, which in use of the motor-vehicle faces outwards, and an inner surface, which in use of the motor-vehicle faces inwards, said glass (P) constituting the aforesaid group main component, and
- a plurality of accessory devices to be assembled on the inner surface of the glass,
wherein a containment rack (8) is provided with a plurality of glasses (P) arranged side-by-side, in vertical positions, said rack (8) being configured to leave the outer surface of a glass (P), placed at one end of the series of glasses within the rack (8), accessible,
wherein after picking-up the glass (P) from the rack (8), and if necessary after bringing the glass (P) to a position for checking the quality of the glass, the robot (R) places the glass in a position suitable for allowing the assembling by the operator (3) of the additional component parts on the inner surface of the glass (P),
said position for assembling the component parts being a position in which the glass is arranged with its inner surface facing upwards, and at a height and with an inclination that is convenient for the operator (3), in order to manually assemble the additional component parts on the glass,
wherein in said step of assembling the additional component parts, the robot (R) ensures that the glass is supported motionless in its position, despite the forces applied by the operator (3) to the glass (P) during assembling of said additional component parts, and
wherein the position in which the robot holds the glass during assembling of the component parts is automatically varied by an electronic controller, with the aid of a videocamera, according to operator anthropometric parameters detected by said videocamera and/or depending upon specific operations that the operator carries out during a work cycle, and that are monitored by said videocamera.

2. A method according to claim 1, wherein said robot (R) is also used to support the main component (P), after it has been picked-up from said container (8), in one or more positions suitable for performing optical inspection of the quality of the main component (P).

3. A method according to claim 1, **characterized in that** said robot (R) is a multi-axis manipulator robot equipped with a gripping tool (G) provided with vacuum-operated suction cups (V).

4. A method according to claim 3, **characterized in that** the robot (R) is controlled to pick up a glass (P) from the rack by engaging the outer surface of the glass with its suction cups (V), and subsequently to arrange the glass (P) in one or more positions in which the quality of the glass is controlled by an optical inspection, by an operator (3) and/or with the help of at least one videocamera connected to an electronic controller, which is configured and programmed to check the quality of the glass based on one or more images by said at least one videocamera.

5. A method according to claim 1, **characterized in that** after assembling of said additional component parts, said robot (R) brings the glass to a station (A) for applying an adhesive layer along a peripheral portion of the inner surface of the glass, said robot (R) orientating the glass in said adhesive application station (A) with its inner surface facing upwards, and **in that** said robot subsequently moves the glass into an inverted position, with the inner surface facing downwards and applies the glass onto a motor-vehicle body, which is arranged along the aforesaid assembling line (1) of motor-vehicles.

6. An installation for assembling a group of motor-vehicle component parts and for mounting the group in a motor-vehicle assembling line,
said installation comprising:
- an operating area (2) located outside of, and adjacent to, said motor-vehicle assembling line (1), where the group (P) can be assembled by an operator (3), and
- a robot (R) adjacent to said operating area (2) for mounting the assembled group (P) onto a motor-vehicle structure along said motor-vehicle assembling line (1),
wherein said installation also comprises a container (8) of main components (P), adjacent to said operating area (2),
wherein:
said robot (R) is a robot configured and/or controlled in such a way that the robot can operate in an unprotected space which is not separated by fences from said operating area (2) in which the operator is located (3), and
said robot (R) is configured and controlled in such a way that said robot
- performs the pick-up operation of the main component (P) from the container (8),
- holds the picked-up component (P) in a position suitable for manual assembling of the plurality of accessory parts onto the main component (P) by the aforesaid operator (3),
- carries-out mounting of the assembled group (P) onto a motor-vehicle structure,
wherein the group of motor-vehicle component parts is a motor-vehicle windscreen unit (P) or a rear window unit, including:
- a windscreen or rear window glass (P), having an outer surface, which in use of the motor-vehicle faces outwards, and an inner surface, which in use of the motor-vehicle faces inwards, said glass (P) constituting said group main component, and
- a plurality of accessory devices to be assembled onto the inner surface of the glass (P),
- said robot (R) is a multi-axis manipulator robot (R) equipped with a gripping tool (G) provided with vacuum-operated suction cups (V),
wherein, after picking-up the glass (P) from the container (8), and if necessary after bringing the glass (P) to a position for checking the quality of the glass, the robot (R) is programmed for holding the glass in a position suitable for allowing assembling by the operator (3) of the additional component parts on the inner surface of the glass (P),
said position for assembling the component parts being a position in which the glass (P) is substantially horizontal, with the inner surface facing upwards, and at a height that is convenient for the operator (3), in order to manually assemble the additional component parts on the glass (P), and
wherein in said step of assembling the additional component parts, the robot (R) is programmed for ensuring that the glass is supported motionless in its position, despite the forces applied by the operator (3) to the glass (P) during assembling of said additional component parts, and
wherein the installation comprises an electronic controller configured and programmed to automatically vary - with the help of a videocamera - the position in which the robot holds the glass during assembling of the component parts, according to operator anthropometric parameters detected by said video camera and/or depending upon specific operations that the operator carries out during a work cycle, and that are monitored by said video camera.

7. An installation according to claim 6, wherein said robot (R) is also configured and controlled to support the main component (P), after it has been picked-up from the container (8), in one or more positions suitable for performing optical detection of the quality of the main component (P).

8. An installation according to claim 6, **characterized in that** the container (8) is arranged with a plurality of glasses (P) arranged side-by-side, in vertical positions, said container (8) being configured to leave the outer surface of a glass (P), at one end of the series of glasses within the container (8), accessible.

9. An installation according to claim 6, **characterized in that** the robot (R) is controlled to pick up a glass (P) from the container by engaging the outer surface of the glass with its suction cups (V), and subsequently to arrange the glass (P) in one or more positions in which the quality of the glass is controlled by an optical inspection, by an operator (3) and/or with the help of at least one videocamera connected to an electronic controller, which is configured and programmed to check the quality of the glass based on one or more images by said at least one videocamera.

10. An installation according to claim 6, **characterized in that** after assembling of said additional component parts, said robot is programmed to bring the glass to a station (A) for applying an adhesive layer along a peripheral portion of the inner surface of the glass (P), said robot orientating the glass in said adhesive application station (A) with its inner surface facing upwards,
and **in that** the robot (R) is programmed to subsequently move the glass (P) into an inverted position, with the inner surface facing downwards and to apply the glass (P) onto a motor-vehicle structure, which is arranged along said vehicle assembling line (1).

11. An installation according to claim 6, **characterized in that** said gripping tool (G) comprises suction cup members (V) axially movable by respective actuators (L) between a retracted position and an advanced position, to press the glass onto said motor-vehicle structure, in the final mounting step for mounting the group (P) onto the motor-vehicle structure.

## Patentansprüche

1. Verfahren zum Zusammenbauen einer Gruppe von Kraftfahrzeugbauteilen und zur Montage der Gruppe in einer Kraftfahrzeugmontagelinie,
wobei dieses Verfahren eine erste Gruppen-Zusammenbau-Phase zum Zusammenbauen der Gruppe (P) und eine darauffolgende Montagephase zum Montieren der zusammengebauten Gruppe (P) auf einen Kraftfahrzeugaufbau entlang einer Kraftfahrzeugmontagelinie (1) umfasst,
wobei die erste Zusammenbau-Phase die folgenden Arbeitsvorgänge umfasst:
- Aufnehmen einer Hauptkomponente (P) aus einem Behälter (8) mit Hauptkomponenten (P),
- Anordnen der Hauptkomponente in einer geeigneten Position für die manuelle Montage einer Vielzahl von Zubehörteilen auf die Hauptkomponente (P),
- Ausführen durch eine Arbeitskraft (3) der manuellen Montage der oben genannten Zubehörteile auf die Hauptkomponente (P) durch manuelles Aufnehmen der Zubehörteile aus einem entsprechenden Aufnahmebereich (11),
- Ausführen der Montage der zusammengebauten Gruppe (P) auf einen Kraftfahrzeugaufbau entlang der Montagelinie mithilfe eines Roboters (R),
wobei der Roboter ein Roboter ist, der derart gestaltet ist und/oder gesteuert wird, dass der Roboter in einem ungeschützten Bereich nahe der Arbeitskraft (3) arbeiten kann, und
wobei der Roboter (R) zu Folgendem verwendet wird:
- zum Ausführen eines Arbeitsvorgangs zum Aufnehmen der Hauptkomponente (P) aus dem Behälter (8),
- zum Anordnen der aufgenommenen Hauptkomponente (P) in einer geeigneten Position für die manuelle Montage der Vielzahl von Zubehörteilen auf die Hauptkomponente (P) durch die Arbeitskraft (3), wobei der Roboter die Hauptkomponente in dieser Position hält, während die Zubehörteile von der Arbeitskraft (3) montiert werden, und
- zum Ausführen der Montage der zusammengebauten Gruppe (P) auf einen Kraftfahrzeugaufbau,
wobei die Gruppe von Kraftfahrzeugbauteilen eine Windschutzscheibeneinheit (P) oder eine Heckscheibeneinheit eines Kraftfahrzeugs ist, umfassend:
- ein Windschutzscheiben- oder Heckscheibenglas (P) mit einer Außenfläche, die beim Gebrauch des Kraftfahrzeugs nach außen gerichtet ist, und einer Innenfläche, die beim Gebrauch des Kraftfahrzeugs nach innen gerichtet ist, wobei das Glas (P) die oben genannte Hauptkomponente der Gruppe darstellt, und
- eine Vielzahl von Zubehöreinrichtungen, die auf die Innenfläche des Glases montiert werden sollen,
wobei ein Aufnahmegestell (8) mit einer Vielzahl von Gläsern (P) versehen ist, die nebeneinander in senkrechter Stellung angeordnet sind, wobei das Gestell (8) so gestaltet ist, dass die Außenfläche eines Glases (P), das am Ende der Reihe von Gläsern in dem Gestell (8) platziert ist, zugänglich gelassen wird,
wobei der Roboter (R) nach dem Aufnehmen des Glases (P) aus dem Gestell (8) und erforderlichenfalls nach dem Bringen des Glases (P) in eine Position für die Prüfung der Qualität des Glases das Glas in einer Position platziert, die geeignet ist, die Montage der zusätzlichen Bauteile auf die Innenfläche des Glases (P) durch die Arbeitskraft (3) zu ermöglichen,
wobei die Position für die Montage der Bauteile eine Position ist, in der das Glas mit nach oben gerichteter Innenfläche sowie auf einer Höhe und mit einer Neigung angeordnet ist, die für die Arbeitskraft (3) günstig sind, um die zusätzlichen Bauteile von Hand auf das Glas zu montieren,
wobei der Roboter (R) in dem Schritt der Montage der zusätzlichen Bauteile sicherstellt, dass das Glas trotz der von der Arbeitskraft (3) bei der Montage der zusätzlichen Bauteile auf das Glas (P) ausgeübten Kräfte unbeweglich in seiner Position getragen wird, und
wobei die Position, in der der Roboter das Glas während der Montage der Bauteile hält, automatisch durch eine elektronische Steuerung mithilfe einer Videokamera in Übereinstimmung mit den von der Videokamera erfassten anthropometrischen Parametern der Arbeitskraft und/oder in Abhängigkeit von spezifischen Arbeitsvorgängen, die die Arbeitskraft während eines Arbeitszyklus ausführt und die von der Videokamera überwacht werden, verändert wird.

2. Verfahren nach Anspruch 1, wobei der Roboter (R) auch dazu verwendet wird, die Hauptkomponente (P), nachdem sie aus dem Behälter (8) aufgenommen wurde, in einer oder mehreren Positionen zu tragen, die zum Ausführen einer Sichtkontrolle der Qualität der Hauptkomponente (P) geeignet sind.

3. Verfahren nach Anspruch 1, **dadurch gekennzeichnet, dass** der Roboter (R) ein Roboter mit mehrachsigem Manipulator ist, der mit einem Greifwerkzeug (G) ausgerüstet ist, das mit vakuumbetriebenen Saugnäpfen (V) versehen ist.

4. Verfahren nach Anspruch 3, **dadurch gekennzeichnet, dass** der Roboter (R) gesteuert wird, um ein Glas (P) aus dem Gestell aufzunehmen, indem er mit seinen Saugnäpfen (V) an der Außenfläche des Glases angreift, und anschließend das Glas (P) in einer oder mehreren Positionen anzuordnen, in denen die Qualität des Glases durch eine Sichtkontrolle durch eine Arbeitskraft (3) und/oder mithilfe von mindestens einer Videokamera, die mit einer elektronischen Steuerung verbunden ist, die dazu eingerichtet und programmiert ist, die Qualität des Glases auf der Grundlage von einem oder mehreren Bildern von der mindestens einen Videokamera zu prüfen, kontrolliert wird.

5. Verfahren nach Anspruch 1, **dadurch gekennzeichnet, dass** der Roboter (R) das Glas nach der Montage der zusätzlichen Bauteile zu einer Station (A) für das Auftragen einer Klebeschicht entlang eines Umfangsbereichs der Innenfläche des Glases bringt, wobei der Roboter (R) das Glas in der Klebstoffauftragstation (A) mit nach oben gerichteter Innenfläche ausrichtet, und dadurch, dass der Roboter das Glas anschließend in eine umgekehrte Lage mit nach unten gerichteter Innenfläche bewegt und das Glas an einem Kraftfahrzeugkörper anbringt, der entlang der oben genannten Montagelinie (1) für Kraftfahrzeuge angeordnet ist.

6. Anlage zum Zusammenbauen einer Gruppe von Kraftfahrzeugbauteilen und zur Montage der Gruppe in einer Kraftfahrzeugmontagelinie,
wobei diese Anlage umfasst:
- einen Arbeitsbereich (2), der sich außerhalb und neben der Kraftfahrzeugmontagelinie (1) befindet und in dem die Gruppe (P) von einer Arbeitskraft (3) zusammengebaut werden kann, und
- einen Roboter (R), angrenzend an den Arbeitsbereich (2), für die Montage der zusammengebauten Gruppe (P) auf einen Kraftfahrzeugaufbau entlang der Kraftfahrzeugmontagelinie (1),
wobei die Anlage außerdem einen Behälter (8) mit Hauptkomponenten (P) angrenzend an den Arbeitsbereich (2) umfasst,
wobei:
der Roboter (R) ein Roboter ist, der derart gestaltet ist und/oder gesteuert wird, dass der Roboter in einem ungeschützten Bereich arbeiten kann, der nicht durch Zäune von dem Arbeitsbereich (2) abgesondert ist, in dem sich die Arbeitskraft (3) befindet, und
der Roboter (R) derart gestaltet ist und gesteuert wird, dass der Roboter
- den Arbeitsvorgang zum Aufnehmen der Hauptkomponente (P) aus dem Behälter (8) ausführt,
- die aufgenommene Komponente (P) in einer Position hält, die sich für die manuelle Montage der Vielzahl von Zubehörteilen auf die Hauptkomponente (P) durch die oben genannte Arbeitskraft (3) eignet,
- die Montage der zusammengebauten Gruppe (P) auf einen Kraftfahrzeugaufbau ausführt,
wobei die Gruppe von Kraftfahrzeugbauteilen eine Windschutzscheibeneinheit (P) oder eine Heckscheibeneinheit eines Kraftfahrzeugs ist, umfassend:
- ein Windschutzscheiben- oder Heckscheibenglas (P) mit einer Außenfläche, die beim Gebrauch des Kraftfahrzeugs nach außen gerichtet ist, und einer Innenfläche, die beim Gebrauch des Kraftfahrzeugs nach innen gerichtet ist, wobei das Glas (P) die Hauptkomponente der Gruppe darstellt, und
- eine Vielzahl von Zubehöreinrichtungen, die auf die Innenfläche des Glases (P) montiert werden sollen,
- wobei der Roboter (R) ein Roboter mit mehrachsigem Manipulator (R) ist, der mit einem Greifwerkzeug (G) ausgerüstet ist, das mit vakuumbetriebenen Saugnäpfen (V) versehen ist,
wobei der Roboter (R) darauf programmiert ist, nach dem Aufnehmen des Glases (P) aus dem Behälter (8) und erforderlichenfalls nach dem Bringen des Glases (P) in eine Position für die Prüfung der Qualität des Glases das Glas in einer Position zu halten, die geeignet ist, die Montage der zusätzlichen Bauteile auf die Innenfläche des Glases (P) durch die Arbeitskraft (3) zu ermöglichen,
wobei die Position für die Montage der Bauteile eine Position ist, in der das Glas (P) im Wesentlichen waagrecht mit nach oben gerichteter Innenfläche und auf einer Höhe ist, die für die Arbeitskraft (3) günstig sind, um die zusätzlichen Bauteile von Hand auf das Glas (P) zu montieren, und
wobei der Roboter (R) in dem Schritt der Montage der zusätzlichen Bauteile darauf programmiert ist, sicherzustellen, dass das Glas trotz der von der Arbeitskraft (3) bei der Montage der zusätzlichen Bauteile auf das Glas (P) ausgeübten Kräfte unbeweglich in seiner Position getragen wird, und
wobei die Anlage eine elektronische Steuerung umfasst, die dazu eingerichtet und programmiert ist, automatisch - mithilfe einer Videokamera - die Position, in der der Roboter das Glas während der Montage der Bauteile hält, in Übereinstimmung mit anthropometrischen Parametern der Arbeitskraft, die von der Videokamera erfasst werden, und/oder in Abhängigkeit von spezifischen Arbeitsvorgängen, die die Arbeitskraft während eines Arbeitszyklus ausführt und die von der Videokamera überwacht werden, zu verändern.

7. Anlage nach Anspruch 6, wobei der Roboter (R) auch dazu eingerichtet ist und gesteuert wird, die Hauptkomponente (P), nachdem sie aus dem Behälter (8) aufgenommen wurde, in einer oder mehreren Positionen zu tragen, die zum Ausführen einer optischen Erfassung der Qualität der Hauptkomponente (P) geeignet sind.

8. Anlage nach Anspruch 6, **dadurch gekennzeichnet, dass** der Behälter (8) mit einer Vielzahl von nebeneinander in senkrechter Stellung angeordneten Gläsern (P) angelegt ist, wobei der Behälter (8) so gestaltet ist, dass die Außenfläche eines Glases (P) am Ende der Reihe von Gläsern in dem Behälter (8) zugänglich gelassen wird.

9. Anlage nach Anspruch 6, **dadurch gekennzeichnet, dass** der Roboter (R) gesteuert wird, um ein Glas (P) aus dem Behälter aufzunehmen, indem er mit seinen Saugnäpfen (V) an der Außenfläche des Glases angreift, und anschließend das Glas (P) in einer oder mehreren Positionen anzuordnen, in denen die Qualität des Glases durch eine Sichtkontrolle durch eine Arbeitskraft (3) und/oder mithilfe von mindestens einer Videokamera, die mit einer elektronischen Steuerung verbunden ist, die dazu eingerichtet und programmiert ist, die Qualität des Glases auf der Grundlage von einem oder mehreren Bildern von der mindestens einen Videokamera zu prüfen, kontrolliert wird.

10. Anlage nach Anspruch 6, **dadurch gekennzeichnet, dass** der Roboter darauf programmiert ist, das Glas nach der Montage der zusätzlichen Bauteile zu einer Station (A) für das Auftragen einer Klebeschicht entlang eines Umfangsbereichs der Innenfläche des Glases (P) zu bringen, wobei der Roboter das Glas in der Klebstoffauftragstation (A) mit nach oben gerichteter Innenfläche ausrichtet,
und dadurch, dass der Roboter (R) darauf programmiert ist, das Glas (P) anschließend in eine umgekehrte Lage mit nach unten gerichteter Innenfläche zu bewegen und das Glas (P) an einem Kraftfahrzeugaufbau anzubringen, der entlang der Kraftfahrzeugmontagelinie (1) angeordnet ist.

11. Anlage nach Anspruch 6, **dadurch gekennzeichnet, dass** das Greifwerkzeug (G) Saugnapfelemente (V), die von entsprechenden Aktuatoren (L) zwischen einer zurückgezogenen Stellung und vorgerückten Stellung axial bewegt werden können, umfasst, um das Glas im letzten Montageschritt für die Montage der Gruppe (P) auf den Kraftfahrzeugaufbau auf den Kraftfahrzeugaufbau zu pressen.

## Revendications

1. Procédé d'assemblage d'un groupe de pièces constitutives de véhicule automobile et de montage du groupe dans une chaîne d'assemblage de véhicule automobile,
ledit procédé comprenant une première phase d'assemblage de groupe pour assembler le groupe (P) et une deuxième phase d'assemblage ultérieure pour monter le groupe assemblé (P) sur une structure de véhicule automobile le long d'une chaîne d'assemblage (1) de véhicule automobile,
dans lequel ladite première phase d'assemblage comprend les opérations de :
- prélèvement d'un composant principal (P) d'un conteneur (8) de composants principaux (P),
- agencement du composant principal dans une position appropriée pour l'assemblage manuel d'une pluralité de pièces accessoires sur le composant principal (P),
- réalisation d'un assemblage manuel, par un opérateur (3), des pièces accessoires précitées sur le composant principal (P), en prélevant manuellement les pièces accessoires d'une zone de prélèvement respective (11),
- réalisation d'un montage du groupe assemblé (P) sur une structure de véhicule automobile, le long de ladite chaîne d'assemblage, à l'aide d'un robot (R),
dans lequel ledit robot est un robot configuré et/ou commandé de manière à ce que le robot puisse fonctionner dans un espace non protégé, près de l'opérateur (3), et
dans lequel ledit robot (R) est utilisé :
- pour effectuer l'opération de prélèvement du composant principal (P) du conteneur (8),
- pour agencer le composant principal prélevé (P) dans une position appropriée, pour assembler manuellement la pluralité de pièces accessoires sur le composant principal (P) par ledit opérateur (3), ledit robot maintenant ledit composant principal dans ladite position pendant que les pièces accessoires sont en cours d'assemblage par ledit opérateur (3), et
- pour réaliser le montage du groupe assemblé (P) sur une structure de véhicule automobile,
dans lequel le groupe de pièces constitutives de véhicule automobile est une unité de pare-brise (P) de véhicule automobile ou une unité de lunette arrière, comprenant :
- une vitre de pare-brise ou de lunette arrière (P), ayant une surface extérieure, qui, lors de l'utilisation du véhicule automobile, est tournée vers l'extérieur, et une surface intérieure, qui, lors de l'utilisation du véhicule automobile, est tournée vers l'intérieur, ladite vitre (P) constituant le composant principal de groupe précité, et
- une pluralité de dispositifs accessoires à assembler sur la surface intérieure de la vitre,
dans lequel un râtelier de confinement (8) est pourvu d'une pluralité de vitres (P) agencées côte à côte, dans des positions verticales, ledit râtelier (8) étant configuré pour laisser accessible la surface extérieure d'une vitre (P), placée à une extrémité de la série de vitres à l'intérieur du râtelier (8),
dans lequel après avoir prélevé la vitre (P) du râtelier (8), et si nécessaire après avoir amené la vitre (P) dans une position de contrôle de la qualité de la vitre, le robot (R) place la vitre dans une position appropriée pour permettre l'assemblage par l'opérateur (3) des pièces constitutives supplémentaires sur la surface intérieure de la vitre (P),
ladite position d'assemblage des pièces constitutives étant une position dans laquelle la vitre est agencée avec sa surface intérieure tournée vers le haut, et à une hauteur et avec une inclinaison commodes pour l'opérateur (3), afin d'assembler manuellement les pièces constitutives supplémentaires sur la vitre,
dans lequel, dans ladite étape d'assemblage des pièces constitutives supplémentaires, le robot (R) s'assure que la vitre est soutenue immobile dans sa position, malgré les forces appliquées par l'opérateur (3) à la vitre (P) pendant l'assemblage desdites pièces constitutives supplémentaires, et
dans lequel la position dans laquelle le robot maintient la vitre pendant l'assemblage des pièces constitutives est modifiée automatiquement par un contrôleur électronique, à l'aide d'une caméra vidéo, selon des paramètres anthropométriques de l'opérateur détectés par ladite caméra vidéo et/ou en fonction d'opérations spécifiques que l'opérateur réalise au cours d'un cycle de travail, et qui sont surveillées par ladite caméra vidéo.

2. Procédé selon la revendication 1, dans lequel ledit robot (R) est également utilisé pour soutenir le composant principal (P), après qu'il a été prélevé dudit conteneur (8), dans une ou plusieurs positions appropriées pour effectuer une vérification optique de la qualité du composant principal (P).

3. Procédé selon la revendication 1, **caractérisé en ce que** ledit robot (R) est un robot manipulateur multiaxes équipé d'un outil de préhension (G) pourvu de ventouses à dépression (V).

4. Procédé selon la revendication 3, **caractérisé en ce que** le robot (R) est commandé pour prélever une vitre (P) du râtelier en engageant la surface extérieure de la vitre avec ses ventouses (V), et ensuite pour agencer la vitre (P) dans une ou plusieurs positions dans lesquelles la qualité de la vitre est contrôlée par une vérification optique, par un opérateur (3) et/ou à l'aide d'au moins une caméra vidéo reliée à un contrôleur électronique, qui est configuré et programmé pour contrôler la qualité de la vitre sur la base d'une ou de plusieurs images par ladite au moins une caméra vidéo.

5. Procédé selon la revendication 1, **caractérisé en ce qu'**après assemblage desdites pièces constitutives supplémentaires, ledit robot (R) amène la vitre à un poste (A) pour appliquer une couche adhésive le long d'une partie périphérique de la surface intérieure de la vitre, ledit robot (R) orientant la vitre dans ledit poste d'application d'adhésif (A) avec sa surface intérieure tournée vers le haut, et **en ce que** ledit robot déplace ensuite la vitre dans une position inversée, avec la surface intérieure tournée vers le bas et applique la vitre sur une carrosserie de véhicule automobile, qui est agencée le long de la chaîne d'assemblage (1) précitée de véhicules automobiles.

6. Installation d'assemblage d'un groupe de pièces constitutives de véhicule automobile et de montage du groupe dans une chaîne d'assemblage de véhicule automobile,
ladite installation comprenant :
- une zone de fonctionnement (2) située à l'extérieur de, et adjacente à, ladite chaîne d'assemblage (1) de véhicule automobile, où le groupe (P) peut être assemblé par un opérateur (3), et
- un robot (R) adjacent à ladite zone de fonctionnement (2) pour monter le groupe assemblé (P) sur une structure de véhicule automobile le long de ladite chaîne d'assemblage (1) de véhicule automobile,
dans laquelle ladite installation comprend également un conteneur (8) de composants principaux (P), adjacent à ladite zone de fonctionnement (2),
dans laquelle :
ledit robot (R) est un robot configuré et/ou commandé de manière à ce que le robot puisse fonctionner dans un espace non protégé qui n'est pas séparé par des clôtures de ladite zone de fonctionnement (2) dans laquelle se trouve l'opérateur (3), et
ledit robot (R) est configuré et commandé de manière à ce que ledit le robot
- effectue l'opération de prélèvement du composant principal (P) du conteneur (8),
- maintient le composant prélevé (P) dans une position appropriée pour l'assemblage manuel de la pluralité de pièces accessoires sur le composant principal (P) par l'opérateur (3) précité,
- réalise le montage du groupe assemblé (P) sur une structure de véhicule automobile,
dans laquelle le groupe de pièces constitutives de véhicule automobile est une unité de pare-brise (P) de véhicule automobile ou une unité de lunette arrière, comprenant :
- une vitre de pare-brise ou de lunette arrière (P), ayant une surface extérieure, qui, lors de l'utilisation du véhicule automobile, est tournée vers l'extérieur, et une surface intérieure, qui, lors de l'utilisation du véhicule automobile, est tournée vers l'intérieur, ladite vitre (P) constituant ledit composant principal de groupe, et
- une pluralité de dispositifs accessoires à assembler sur la surface intérieure de la vitre (P),
- ledit robot (R) est un robot manipulateur multiaxes (R) équipé d'un outil de préhension (G) pourvu de ventouses à dépression (V),
dans laquelle, après avoir prélevé la vitre (P) du conteneur (8), et si nécessaire après avoir amené la vitre (P) dans une position de contrôle de la qualité de la vitre, le robot (R) est programmé pour maintenir la vitre dans une position appropriée pour permettre l'assemblage par l'opérateur (3) des pièces constitutives supplémentaires sur la surface intérieure de la vitre (P),
ladite position d'assemblage des pièces constitutives étant une position dans laquelle la vitre (P) est sensiblement horizontale, avec la surface intérieure tournée vers le haut, et à une hauteur commode pour l'opérateur (3), afin d'assembler manuellement les pièces constitutives supplémentaires sur la vitre (P), et
dans laquelle dans ladite étape d'assemblage des pièces constitutives supplémentaires, le robot (R) est programmé pour s'assurer que la vitre est soutenue immobile dans sa position, malgré les forces appliquées par l'opérateur (3) à la vitre (P) pendant l'assemblage desdites pièces constitutives supplémentaires, et
dans laquelle l'installation comprend un contrôleur électronique configuré et programmé pour modifier automatiquement - à l'aide d'une caméra vidéo - la position dans laquelle le robot maintient la vitre pendant l'assemblage des pièces constitutives, selon des paramètres anthropométriques de l'opérateur détectés par ladite caméra vidéo et/ou en fonction d'opérations spécifiques que l'opérateur réalise au cours d'un cycle de travail, et qui sont surveillées par ladite caméra vidéo.

7. Installation selon la revendication 6, dans laquelle ledit robot (R) est également configuré et commandé pour soutenir le composant principal (P), après qu'il a été prélevé du conteneur (8), dans une ou plusieurs positions appropriées pour effectuer une détection optique de la qualité du composant principal (P).

8. Installation selon la revendication 6, **caractérisée en ce que** le conteneur (8) est agencé avec une pluralité de vitres (P) agencées côte à côte, dans des positions verticales, ledit conteneur (8) étant configuré pour laisser accessible la surface extérieure d'une vitre (P), à une extrémité de la série de vitres à l'intérieur du conteneur (8).

9. Installation selon la revendication 6, **caractérisée en ce que** le robot (R) est commandé pour prélever une vitre (P) du conteneur en engageant la surface extérieure de la vitre avec ses ventouses (V), et ensuite agencer la vitre (P) dans une ou plusieurs positions dans lesquelles la qualité de la vitre est contrôlée par une vérification optique, par un opérateur (3) et/ou à l'aide d'au moins une caméra vidéo reliée à un contrôleur électronique, qui est configuré et programmé pour contrôler la qualité de la vitre sur la base d'une ou de plusieurs images par ladite au moins une caméra vidéo.

10. Installation selon la revendication 6, **caractérisée en ce qu'**après assemblage desdites pièces constitutives supplémentaires, ledit robot est programmé pour amener la vitre à un poste (A) pour appliquer une couche adhésive le long d'une partie périphérique de la surface intérieure de la vitre (P), ledit robot orientant la vitre dans ledit poste d'application d'adhésif (A) avec sa surface intérieure tournée vers le haut,
et **en ce que** le robot (R) est programmé pour déplacer ensuite la vitre (P) dans une position inversée, avec la surface intérieure tournée vers le bas et pour appliquer la vitre (P) sur une structure de véhicule automobile, qui est agencée le long de ladite chaîne d'assemblage (1) de véhicule.

11. Installation selon la revendication 6, **caractérisée en ce que** ledit outil de préhension (G) comprend des éléments ventouses (V) déplaçables axialement par des actionneurs respectifs (L) entre une position rétractée et une position avancée, pour presser la vitre sur ladite structure de véhicule automobile, dans l'étape de montage final pour le montage du groupe (P) sur la structure de véhicule automobile.
